# EUROPÄISCHE PATENTSCHRIFT

(11) **EP 0 509 139 B1**
(45) Veröffentlichungstag und Bekanntmachung des Hinweises auf die Patenterteilung: **03.04.1996**
(21) Anmeldenummer: 91119598.0
(22) Anmeldetag: 16.11.1991
(51) Int. Cl.: B65H 19/12

(54) **Vorrichtung zur Halterung und Führung einer Achse oder Welle oder eines Lagerrings**
Device for supporting and guiding an axle or shaft or a bearing ring
Dispositif pour supporter et guider un axe ou arbre ou un anneau de palier

(30) Priorität: 26.03.1991 DE 4109888
(43) Veröffentlichungstag der Anmeldung: 21.10.1992
(73) Patentinhaber: LEYBOLD AKTIENGESELLSCHAFT, D-63450 Hanau (DE)
(72) Erfinder: Contzen, Klaus, W-6369 Nidderau 2 (DE)

(56) Entgegenhaltungen:
- EP-A- 0 254 006
- EP-A- 0 438 733
- DE-C- 456 461
- GB-A- 2 153 792

## Beschreibung

Die Erfindung bezieht sich auf eine Vorrichtung zur Halterung und Führung einer Achse oder Welle oder eines Lagerrings mit einer Lagerstütze und mit einer mit der Lagerstütze eine Aufnahmebohrung bildende Halteklaue, wobei die Halteklaue an der Lagerstütze um einen Bolzen schwenkbar angeordnet ist und wobei die Lagerstütze mit Führungselementen versehen ist, deren einander zugekehrte Führungsflächen paarweise bis über den Bereich der Halteklaue hinausreichen und sich dabei V-förmig nach oben zu erweitern. Derartige Vorrichtungen sind beispielsweise bei Bandbedampfungsanlagen, in denen Folien bei hohen Umwickelgeschwindigkeiten im Vakuum über eine Bedampfungsquelle geführt und mit Al bedampft werden, erforderlich.

Anwendungen hierfür sind zum Beispiel Verpackungsfolien oder Wickelkondensatoren für die Elektronik.

Die Folien sind auf einer Welle aufgewickelt und werden im Chargenbetrieb alle 1 - 2 h ausgewechselt.

Bei großtechnischen Bandbedampfungsanlagen werden Folienbreiten bis 3 m beschichtet. Die Folien sind zu einem wickeltrum von ca. 1 m aufgewickelt. Die tonnenschweren Wickel werden mittels eines Hallenkranes, am Seil hängend, von oben über die geöffnete Anlage in die vorgesehene Position gefahren und in die Lageraufnahme abgesenkt. Dies erfolgt in der Regel so, daß ein Mann - auf dem Boden stehend - den Kran bedient, während ein zweiter mittels Leiter oder anderer Hilfsmittel auf die Höhe der Umwicklungseinrichtungen klettert und die Walze per Hand in die richtige Position dirigiert. Nach erfolgter Absenkung werden beide Wellenlager durch Umklappen der geöffneten oberen Lagerhälfte geschlossen und mit geeigneten Mitteln zugeschraubt. Diese Tätigkeit erfordert einiges Geschick, vor allem bei 3 m hohen Anlagen und 3 m langen Wickeltrums.

Durch die schwere Zugänglichkeit des Wickelsystems mit der Vielzahl von Führungs-, Breitstreck-, Meß- und Umlenkwalzen kann das Auswechseln der Wickeltrums nur von erfahrenem Bedienungspersonal vorgenommen werden.

Es muß dabei auf Sauberkeit geachtet werden, d. h. die im Vakuum befindlichen Anlagenteile sollten zum Beispiel nicht durch Schuhabdrücke verunreinigt werden, da sonst die Pumpzeiten verlängert werden.

Andererseits ist die Tätigkeit von einer Leiter aus kaum auszuführen, so daß ein Abstützen auf dem Wickelsystem bei großen Anlagen unvermeidbar ist.

Bekannt ist eine Lagerhalterung (DE-PS 23 63 955), die mit einem Deckelteil versehen ist, das in seiner Schließstellung etwa die obere Hälfte der Lagerhalterung bildet und durch schwenkbar mit diesem verbundene Halteschrauben mit der unteren Tragschale verriegelbar ist. Die Halteschrauben sind in seitlich an der unteren Tragschale vorgesehene Aufnahme- und Widerlagerteile einschwenkbar und mit diesen durch aufgeschraubte Muttern verspannbar. Das Lösen und Aufklappen des Deckelteils muß von Hand geschehen, was einen höheren Betätigungsaufwand bedeutet und den Wechsel der Wellen oder Walzen durch automatisierte Einrichtungen unmöglich macht.

Man hat auch bereits eine Lagerhalterung für auf Wellenzapfen aufgesetzte Lager, vorzugsweise für Lager von Formatzylindern und Farbauftragswalzen von Druckmaschinen vorgeschlagen (ältere Anmeldung EP-A-0 438 733 gemäß Art. 54(3) EPÜ), bestehend aus einer unteren gestellfesten Tragschale und einem schwenkbar mit dieser verbundenen Deckelteil, das in seiner auf das in die Tragschale eingelegte Lager geklappten Schließstellung verriegelbar ist, wobei mit den beiden oberen seitlichen Bereichen der Tragschale je ein Deckelteil um zu dem Wellenzapfen parallele Achsen schwenkbar gelagert ist, das aus dem oberen längeren Arm eines zweiarmigen Hebels besteht, dessen unterer Arm ein Betätigungsteil bildet, der in der ausgeklappten geöffneten Stellung des Deckelteils derart in das Innere der Tragschale ragt, daß er durch Absenken des gegen diesen stoßenden, auf den Wellenzapfen aufgesetzten Lagers in die Tragschale den Deckelteil in seine Schließstellung verschwenkt, in der dieser mit seiner kreisförmig gekrümmten inneren Seite dicht an dem Lager anliegt, wobei die derart in ihre Schließstellung geklappten und mit ihren Stirnseiten aneinander liegenden Deckelteile mit einer diese selbsttätig miteinander verriegelten Einrichtung versehen sind.

Der vorliegenden Erfindung liegt nun die Aufgabe zugrunde, den Wechsel eines Wickeltrums so zu vereinfachen, daß er von einer Person vom Erdboden aus durchgeführt werden kann und kein gefährliches Hantieren von der Leiter aus erforderlich macht. Darüberhinaus soll der Mechanismus zum Verriegeln des Lagers so ausgebildet werden, daß der Verriegelungszustand vom Boden aus überwacht werden kann.

Diese Aufgabe wird durch eine Vorrichtung, die die Merkmale des Anspruchs 1 aufweist, gelöst.

Vorzugsweise ist eine der beiden Halteklauen mit einer Ausnehmung versehen, deren Längsachse quer zur Wellenachse und oberhalb der Ebene, die durch die Bolzen vorgegeben ist, parallel oder in einem Winkel dazu verläuft, wobei zum Zweck der gegenseitigen Verankerung der beiden geschlossenen Halteklauen die gegenüberliegende Halteklaue mit einer entsprechenden Ausnehmung versehen ist, in der ein Schließglied verschiebbar gelagert ist, das in die gegenüberliegende Ausnehmung eintritt und eine formschlüssige Verbindung der beiden Halteklauen bewirkt.

Während vorher ein zweiter Mann diese Tätigkeit mit Hilfe einer Leiter oder durch Hochklettern auf die Anlage oder über eine Hebebühne von Hand das geöffnete Lager schließen und durch Verschrauben gegen Öffnen sichern mußte, kann dies jetzt in einfacher Weise über einen elektrisch betätigten Schließmechanismus, z. B. einen Kurzhubzylinder mit Schließbolzen, erfolgen.

Mit Vorteil ist das Schließglied motorisch bewegbar, beispielsweise über einen pneumatisch, hydraulisch oder elektrisch angetriebenen Kolben.

Zweckmäßigerweise erfolgt die gegenseitige Verankerung der beiden Halteklauen im geschlossenen Zustand über eine Ansteuerung, beispielsweise ein elektrisches Signal, wobei die Signalrückmeldung über eine Anzeige, vorzugsweise eine Signallampe, vornehmbar ist.

Die Erfindung läßt die verschiedensten Ausführungsmöglichkeiten zu; eine davon ist in den anhängenden Zeichnungen näher dargestellt und zwar zeigen:
- Fig. 1: die Teile einer Vorrichtung zur Lagerung einer Welle, an deren Ende Wälzlager aufgesetzt sind, mit einer Einrichtung zum selbsttätigen Öffnen und Schließen der Lagerhalterung beim Wechseln der Welle,
- Fig. 2: die Vorrichtung nach Fig. 1 in geschlossenem Zustand in Draufsicht,
- Fig. 3: die Vorrichtung nach Fig. 1, in axialer Richtung gesehen, mit geöffneten Halteklauen beim Ansenken der Welle,
- Fig. 4: die Vorrichtung nach Fig. 1, in axialer Richtung gesehen, mit geschlossenen Halteklauen und mit gegenüber der Darstellung in Fig. 1 zusätzlich vorgesehenen Anschlägen 19 und 20 für die Öffnungsstellung der Halteklauen,
- Fig. 5: die Vorrichtung nach Fig. 1, in axialer Richtung gesehen, mit ihren Hilfsmitteln zum Einführen der Welle in ihre Endlage,
- Fig. 6: ein Ausführungsbeispiel für die Verriegelung der Halteklauen der Vorrichtung nach Fig. 1 und
- Fig. 7: ein weiteres Ausführungsbeispiel für die Verriegelung der Halteklauen der Vorrichtung nach Fig. 1.

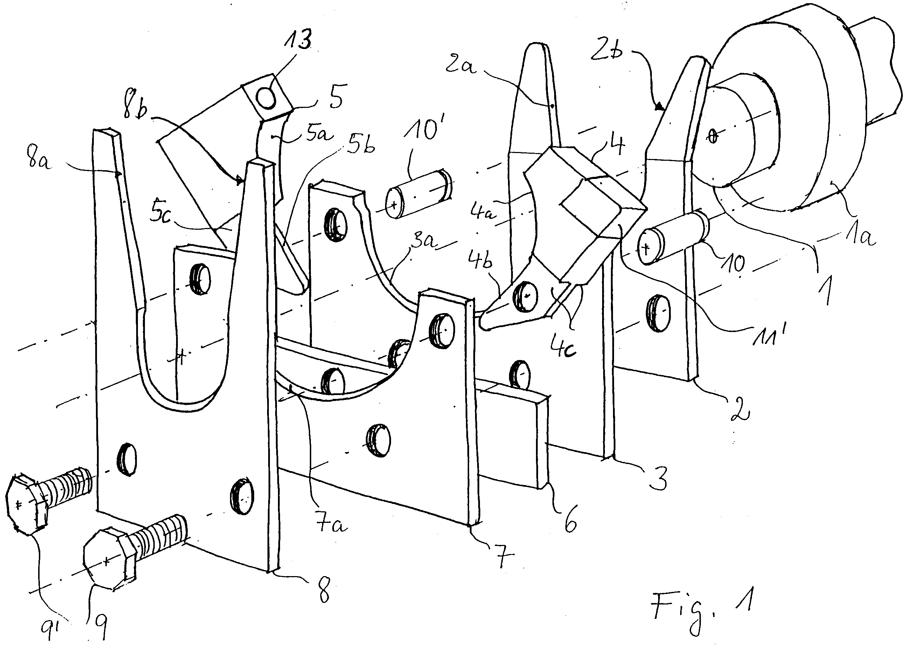

Die in Figur 1 dargestellte Vorrichtung zur Lagerung einer Welle ermöglicht in einfacher Weise den Wechsel einer Welle 1 als Träger, z. B. eines Wickeltrums. An den Enden der Welle 1 sind im Regelfall Wälzlager 1a aufgesteckt, deren Außendurchmesser kleiner als der Wellendurchmesser ist (in Figur 1 nicht dargestellt). Dadurch kann die Welle in einfacher Form durch den Wickel geschoben werden und mittels Klemmvorrichtungen festgestellt werden.

Beim Wechsel eines Wickeltrums wird dieser mittels einer Hebevorrichtung, z. B. einem Hallenkran, an Seilen hängend, so über die Anlage gefahren, daß die Achse 1 mit dem Wälzlager 1a auf die untere Lageraufnahme, bestehend aus den beiden Lagerstützen 3 und 7, abgesenkt werden kann.

Die beiden Lagerstützen 3 und 7 sind über eine Abstandsplatte 6 mittels der Befestigungsschrauben 9 und 9' miteinander verbunden.

Die Lagerstützen 3, 7 und die Abstandsplatte 6 können auch als einteiliger Körper ausgeführt sein und vertikale Bohrungen zur Befestigung der Lagerstütze auf der Unterlage aufweisen. Die Bohrungen haben Versenkungen zur Aufnahme des Schraubenkopfes. Diese Details sind der Anschaulichkeit halber nicht in Figur 1 dargestellt.

Zwischen den beiden Lagerstützen 3 und 7 sind, schwenkbar um 2 Achsenbolzen 10 und 10', die beiden oberen Hälften der Lagerhalterung, die Halteklauen 4 und 5 angebracht. Im geschlossenen Zustand umfassen sie das Wälzlager 1a mit ihren Auflageflächen 4a und 5a. Im geöffneten Zustand geben sie den Weg für das Ausfahren der Welle frei.

Die Form der beiden Halteklauen ist so ausgeführt, daß durch das Ausfahren der Welle nach oben die Halteklauen selbständig den Weg freigeben und durch ihr Kippmoment auch geöffnet bleiben. Umgekehrt bewirkt die Formgebung der Halteklauen unterhalb der Achsenbolzen (10, 10') als fingerförmiger Hebel (4b, 5b), daß sich die Halteklauen selbständig schließen, wenn nämlich das Wälzlager 1a gegen die Anschlagfläche des fingerförmigen Hebels (4b, 5b) stößt.

Für die einfache Lagerung der Halteklauen (4, 5) zwischen den Stützplatten (3, 7) mit dem Drehpunkt um die Achsenbolzen (10, 10') sind im Ausführungsbeispiel der Figur 1 Ausfräsungen (4c, 5c) vorgesehen.

Um das automatische Einführen einer Welle beim Absenken zu erleichtern, ist auf beiden Seiten der Stützplatten 3 und 7 jeweils ein Führungselement 2 und 8 vorgesehen. Dieses besteht aus einer Platte mit einer Achsenbohrung zur Aufnahme der Welle, die nach oben V-förmig geöffnet ist und Anschlagflächen (2a, 2b bzw. 8a, 8b) aufweist.

Beide Führungselemente sind mit der Lagerstütze über die Befestigungsschrauben (9, 9') verschraubt.

Bei dem Führungselement 2, das dem Wickeltrum zugewandt ist, sind die beiden Anschlagflächen (2a, 2b) leicht nach innen gebogen, um beim Absenken der Welle auch seitliches Spiel für den Einfädelvorgang zuzulassen.

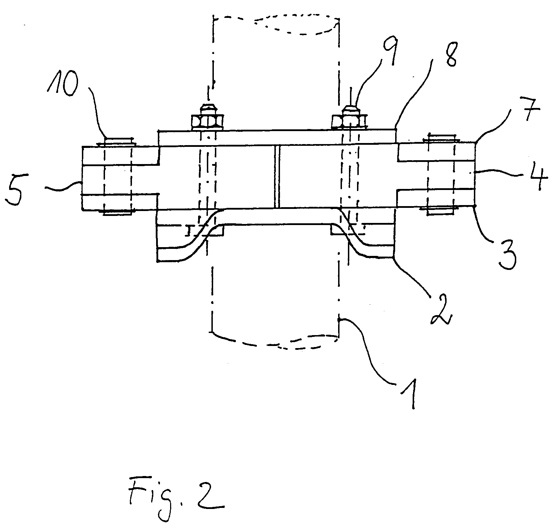

Figur 2 zeigt das Wellenlager im geschlossenen Zustand als Querschnittszeichnung. Die beiden Lagerstützplatten 3 und 7 werden durch die Abstandsplatte 6 so auf Abstand gehalten, daß die beiden Halteklauen 4 und 5 sich leichtgängig um die Achsbolzen 10 und 10' drehen können.

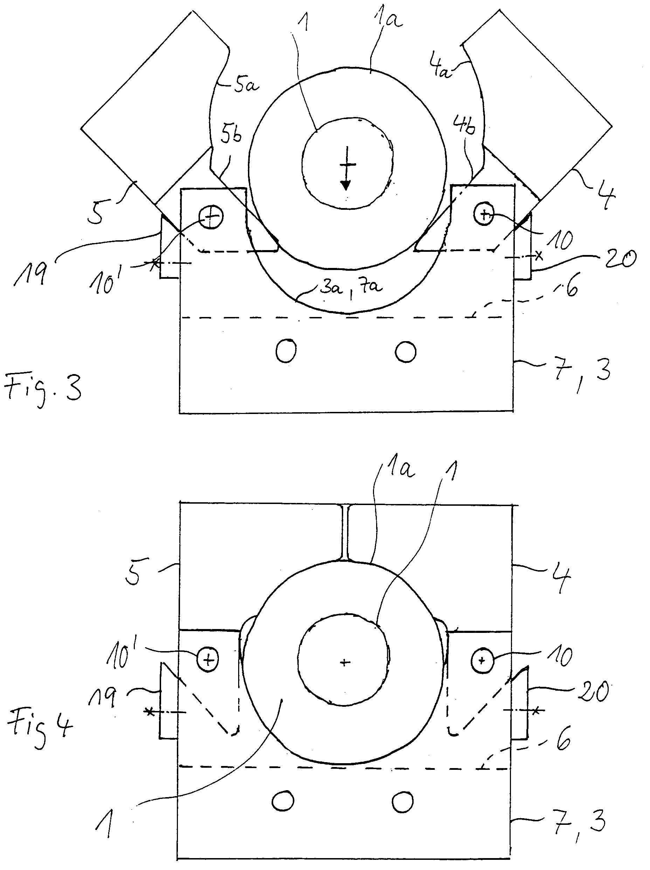

Aus Figur 3 wird deutlich, wie das selbsttätige Schließen und Öffnen funktioniert. Der Pfeil deutet den Vorgang des Schließens an. Beim Absenken der Welle stößt diese gegen die beiden Anschlagflächen 4b und 5b der beiden fingerförmigen Hebel der Halteklauen und bewirkt das Zusammenklappen bis zur Auflage der Flächen 4a und 5a auf der Welle. Dieser Zustand ist in Figur 4 dargestellt. Beim Öffnen, d. h. Herausheben der Welle, dienen die Auflageflächen 4a und 5b als Anschlagfläche für die öffnende Bewegung, bis die beiden Halteklauen 4 und 5 durch ihre Schwerkraft in die geöffnete Endstellung fallen. Diese ist durch Anschlagplatten, die an den Stützplatten angeschraubt sind, vorgegeben.

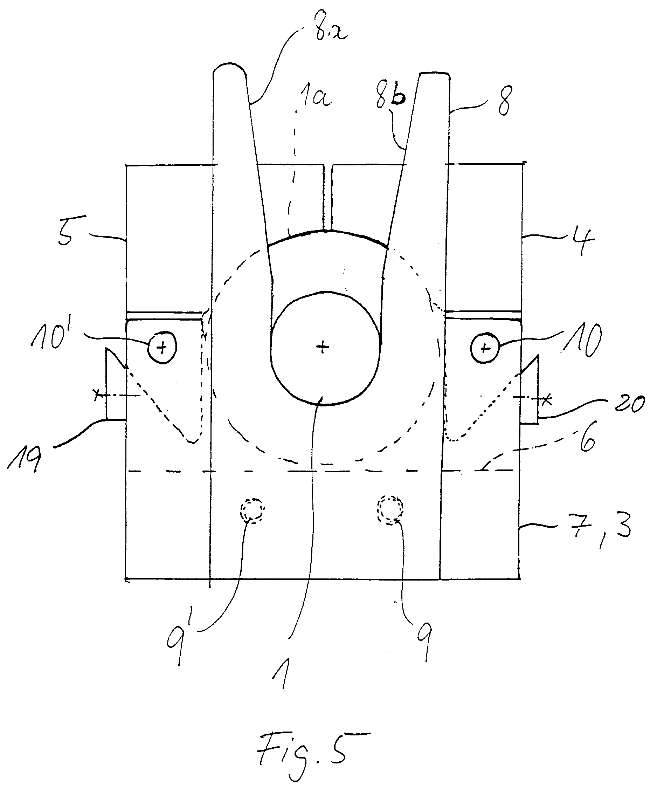

Aus Figur 5 geht die Form der Führungselemente (2, 8) hervor. Das Führungselement 8 ist V-förmig ausgeschnitten und bewirkt mit ihren Führungsflächen 8a, 8b, eine Zwangsführung der Welle beim Absenken in die Endlage.

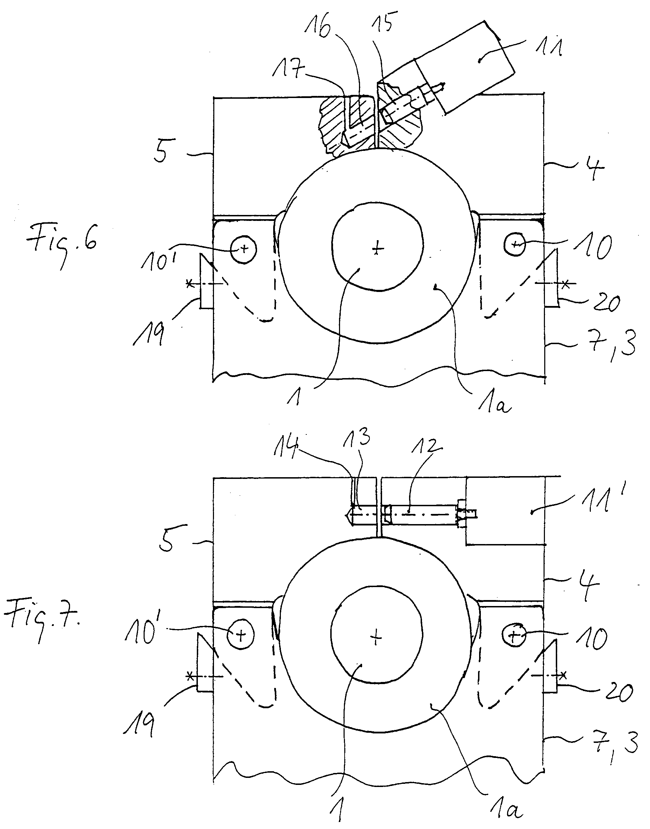

Schließlich sind in Figuren 6 und 7 zwei Ausführungsbeispiele für die Verriegelung der beiden Halteklauen im geschlossenen Zustand abgebildet.

Eine der Halteklauen (4, 4') hat Ausfräsungen zur Aufnahme eines Kurzhubzylinders (11, 11'). An diesem ist der als Schließglied dienende Bolzen (12, 12') befestigt. Der Bolzen kann in der Bohrung (13, 16) so bewegt werden, daß er in die Sacklochbohrung (14, 17) der gegenüberliegenden Halteklaue eingreift und beide Halteklauen gegen Öffnen verriegelt.

Zur besseren Entgasung ist die Sacklochbohrung (14, 17) mit einer Entlüftungsbohrung (15, 18) versehen.

Die Erfindung läßt mehrere Möglichkeiten einer selbsttätig schließenden und öffnenden Lagerhaltung zu. Bei den Bandanlagen kommen in der Regel radiale Wälzlager zum Einsatz, die so auf einem Wellenabsatz sitzen, daß der Wälzlageraußendurchmesser kleiner als der Wellendurchmesser ist. Die Welle kann so leicht durch den Wickel gesteckt und mit geeigneten Vorrichtungen verspannt werden. Falls das Lager größer ist als der Wellendurchmesser, kann das Lager mittels Aufsteckhülsen leicht abgezogen werden.

Es ist aber auch denkbar, daß das Klapplager als Gleitlager ausgebildet ist. In diesem Fall, der für langsam drehende und gewichtsmäßig stark belastete Lager in Frage kommt, müssen die Aufnahmeflächen 3a, 7a und 5a besonders sorgfältig bearbeitet sein, da sie die Lauffläche des Lagers bilden. Auch für die Lagerung der Halteklauen (4, 5 bzw. 4', 5') mittels der Achsenbolzen (10, 10') sind dann engere Toleranzen erforderlich.

### Bezugszeichenliste

- 1: Wellenende
- 1a: Lagerring
- 2: Führungselement
- 2a: Führungsfläche
- 2b: Führungsfläche
- 3: Lagerstütze
- 3a: Auflagefläche
- 4: Halteklaue
- 4': Halteklaue
- 4a: Auflagefläche, Haltklaue
- 4b: fingerförmiger Hebel
- 5: Halteklaue
- 5': Halteklaue
- 5a: Auflagefläche
- 5b: fingerförmiger Hebel
- 6: Abstandsplatte
- 7: Lagerstützen
- 7a: Auflagefläche
- 8: Führungselement
- 8a: Führungsfläche
- 8b: Führungsfläche
- 9: Befestigungsschraube
- 9': Befestigungsschraube
- 10: Achsenbolzen
- 10': Achsenbolzen
- 11: Schließzylinder
- 11': Schließzylinder
- 12: Schließglied
- 12': Schließglied
- 13: Sacklochbohrung für Schließglied
- 14: Sacklochbohrung für Schließglied
- 15: Entgasungsbohrung
- 16: Sacklochbohrung für Schließglied
- 17: Sacklochbohrung für Schließglied
- 18: Entgasungsbohrung
- 19: Anschlag für Öffnungsstellung
- 20: Anschlag für Öffnungsstellung
- 21: Aufnahmebohrung

## Patentansprüche

1. Vorrichtung zur Halterung und Führung einer Achse oder Welle oder eines Lagerrings (1a), mit einer Lagerstütze (3, 7) und mit einer mit der Lagerstütze (3, 7) eine Aufnahmebohrung (21) bildende Halteklaue (4 bzw. 5), wobei die Halteklaue (4 bzw. 5) an der Lagerstütze (3, 7) um einen Bolzen (10 bzw. 10') schwenkbar ist und wobei die Lagerstütze (3, 7) mit Führungselementen (2, 8) versehen ist, deren einander zugekehrte Führungsflächen (8a, 8b bzw. 2a, 2b) paarweise bis über den Bereich der Halteklaue (4 bzw. 5) hinausreichen und sich dabei V-förmig nach oben zu erweitern, wobei mindestens zwei an den einander gegenüberliegenden Seiten der Lagerstütze (3, 7) schwenkbar angeordnete Halteklauen (4 bzw. 5) von im wesentlichen gleicher Konfiguration vorgesehen sind, die zusammen mit der Lagerstütze (3, 7) die Aufnahmebohrung (21) bilden und wobei jede der beiden Halteklauen (4 bzw. 5) mit mindestens je einem fingerförmigen Hebel (4b, 5b) versehen ist, der jeweils auf der der Lagerstütze zugekehrten Seite des Lagerbolzens (10, 10') der Halteklaue (4 bzw. 5) vorgesehen ist und der sich bei seitlich abgeschwenkter Halteklaue (4 bzw. 5) bis in den Bereich der Aufnahmebohrung (21) hinein erstreckt.

2. Vorrichtung zur Halterung nach Anspruch 1, **dadurch gekennzeichnet,** daß die eine der beiden Halteklauen (5) mit einer Ausnehmung (14, 17) versehen ist, deren Längsachse quer zur Wellenachse 1 und oberhalb der Ebene - die durch die Bolzen (10, 10') vorgegeben ist - parallel oder in einem Winkel dazu verläuft und daß zum Zweck der gegenseitigen Verankerung der beiden geschlossenen Halteklauen (4, 5 bzw. 4', 5') die gegenüberliegende Halteklaue (4, 4') mit einer korrespondierenden Ausnehmung (13, 16) versehen ist, in der ein Schließglied (12, 12') verschiebbar gelagert ist, das in die gegenüberliegende Ausnehmung (14, 17) eintritt und eine formschlüssige Verbindung der beiden Halteklauen (4, 4') bewirkt.

3. Vorrichtung nach Anspruch 2, **dadurch gekennzeichnet,** daß das Schließglied (12, 12') über einen pneumatisch, hydraulisch oder elektrisch angetriebenen Kolben motorisch bewegbar ist.

4. Vorrichtung nach Anspruch 3, **dadurch gekennzeichnet,** daß die gegenseitige Verankerung der beiden Halteklauen im geschlossenen Zustand über eine Ansteuerung erfolgt, wobei die Signalrückmeldung über eine Anzeige, vorzugsweise eine Signallampe, vornehmbar ist.

## Claims

1. Device for holding and guiding an axle or shaft or a bearing ring (1a), having a bearing support (3, 7) and having a holding claw (4 or 5) which with the bearing support (3, 7) forms a location hole (21), the holding claw (4 or 5) being disposed on the bearing support (3, 7) so as to be capable of swivelling about a pin (10 or 10') and the bearing support (3, 7) being provided with guide elements (2, 8), opposing guide faces (8a, 8b or 2a, 2b) of which extend in pairs out beyond the region of the holding claw (4 or 5) and in the process widen in an upward direction in a V-shaped manner, wherein at least two holding claws (4 and 5) of substantially identical configuration are provided, which are disposed so as to be capable of swivelling on the opposing sides of the bearing support (3, 7) and together with the bearing support (3, 7) form the location hole (21), and wherein each of the two holding claws (4 and 5) is provided with at least one finger-like lever (4b, 5b), which is provided in each case at the bearing-support side of the bearing pin (10, 10') of the holding claw (4 or 5) and, when the holding claw (4 or 5) is swivelled away laterally, extends as far as into the region of the location hole (21).

2. Holding device according to claim 1, **characterized in that** one of the two holding claws (5) is provided with a recess (14, 17), the longitudinal axis of which extends at right angles to the shaft axis 1 and above the plane - which is predetermined by the pins (10, 10') - parallel or at an angle thereto, and that for the purpose of mutual anchoring of the two closed holding claws (4, 5 or 4', 5') the opposite holding claw (4, 4') is provided with a corresponding recess (13, 16) in which a closing element (12, 12') is displaceably supported, which engages into the opposite recess (14, 17) and effects a keyed connection of the two holding claws (4, 4').

3. Device according to claim 2, **characterized in that** the closing element (12, 12') is movable in a motorized manner by means of a pneumatically, hydraulically or electrically driven piston.

4. Device according to claim 3, **characterized in that** the mutual anchoring of the two holding claws in the closed state may be effected by an activating device, with check-back indication of the signal being achievable by means of a display, preferably a signal lamp.

## Revendications

1. Dispositif pour supporter et guider un axe ou un arbre ou une bague de roulement (1a), comportant une chaise de roulement (3, 7) et un mors de maintien (4 ou 5) formant avec la chaise de roulement (3, 7) un alésage récepteur (21), dans lequel le mors de maintien (4 ou 5) peut pivoter sur la chaise de roulement (3, 7) autour d'un pivot (10 ou 10') et dans lequel la chaise de roulement (3, 7) est munie d'éléments de guidage (2, 8) dont les surfaces de guidage (8a, 8b ou 2a, 2b), orientées l'une vers l'autre, atteignent, par paire, jusqu'au-dessus du niveau du mors de maintien (4 ou 5) et s'y élargissent vers le haut en forme de V, dans lequel sont prévus au moins deux mors de maintien (4 ou 5), de configuration sensiblement identique, qui sont disposés, avec liberté de pivotement, sur les faces, situées en face l'une de l'autre, de la chaise de roulement (3, 7) et, avec la chaise de roulement (3, 7), forment l'alésage récepteur (21), et dans lequel chacun des deux mors de maintien (4 ou 5) est muni d'au moins un levier en forme de doigt (4a, 5b) qui est chaque fois prévu du côté du pivot (10, 10') du mors de maintien (4 ou 5) orienté vers la chaise de roulement et qui, lorsque le mors de maintien (4 ou 5) est rabattu en pivotant latéralement, s'étend jusque dans la zone de l'alésage récepteur (21).

2. Dispositif pour support selon la revendication 1, caractérisé par le fait que l'un des deux mors de maintien (5) est muni d'un évidement (14, 17) dont l'axe longitudinal est orienté perpendiculairement à l'axe 1 de l'arbre et au-dessus du plan - passant par les pivots (10, 10') - parallèlement à ce plan ou sous un certain angle avec lui et que, aux fins d'un ancrage mutuel des deux mors de maintien (4, 5 ou 4', 5'), fermés, le mors de maintien (4, 4') opposé est muni d'un évidement correspondant (13, 16) dans lequel porte un pêne coulissant (12, 12') qui pénètre dans l'évidement opposé (14, 17) et opère une liaison des deux mors de maintien (4, 4') par complémentarité de forme.

3. Dispositif selon la revendication 2, caractérisé par le fait que le pêne (12, 12') peut se déplacer sous l'action d'un moteur, par l'intermédiaire d'un piston à entraînement pneumatique, hydraulique ou électrique.

4. Dispositif selon la revendication 3, caractérisé par le fait que l'ancrage mutuel des deux mors de maintien à l'état fermé se fait au moyen d'une commande, la signalisation en retour pouvant être opérée par l'intermédiaire d'un témoin, de préférence une lampe de signalisation.
